# EUROPÄISCHE PATENTSCHRIFT

(11) **EP 2 632 741 B1**
(45) Veröffentlichungstag und Bekanntmachung des Hinweises auf die Patenterteilung: **04.03.2015**
(21) Anmeldenummer: 12706521.7
(22) Anmeldetag: 21.02.2012
(51) Int. Cl.: B60B 35/00, B60B 37/04, B60B 27/02, B60K 7/00, B60B 27/00

(54) **ACHSSYSTEM**
AXLE SYSTEM
SYSTÈME D'ESSIEU

(30) Priorität: 01.03.2011 DE 102011004897; 01.03.2011 DE 202011003373 U
(43) Veröffentlichungstag der Anmeldung: 04.09.2013
(73) Patentinhaber: SAF-HOLLAND GmbH, 63856 Bessenbach (DE)
(72) Erfinder: CHRIST, Armin, 63856 Bessenbach (DE); DREWES, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2012/052890
(87) Internationale Veröffentlichungsnummer: WO 2012/116905

(56) Entgegenhaltungen:
- EP-A1- 0 687 826
- DE-B- 1 227 783
- US-A1- 2009 230 649

## Beschreibung

Die vorliegende Erfindung betrifft ein Achssystem, insbesondere zur Anwendung in Nutzfahrzeugen, gemäß dem Oberbegriff des Anspruchs 1.

Derartige, aus dem Stand der Technik bekannte Achssysteme, weisen eine Bremstrommeleinheit auf, welche bevorzugt von außen montier- und demontierbar sein soll. Werden darüber hinaus weitere Anbaueinheiten von außen am Achssystem angebracht, so ergibt sich das Problem, dass diese erst demontiert werden müssen, um anschließend die Bremstrommeleinheit montieren oder demontieren zu können. Besonders bei Verwendung empfindlicher Anbaueinheiten, deren Demontage einen erheblich gesteigerten Aufwand verursacht, werden viele der Vorteile einer auf einfache Weise von außen erreichbaren Bremstrommeleinheit geschmälert oder gar ins Gegenteil verkehrt. Bisher gängige Werkstoffkombinationen ließen eine verbesserte Bauweise.der Trommelbremseinheit nicht zu.

Das gattungsbildende Dokument EP 0 687 826 A1 offenbart eine Lageranordnung für eine Radnabe mit zwei koaxialen Wälzlagern, deren Innenringe und Außenringe miteinander verbunden sind. Die verbundenen Außenringe sind mit Mitteln zur Befestigung eines Rads oder mit Mitteln zum Befestigen der äußeren Buchse an der Radaufhängung versehen: Die Wälzlager können an einem zentralen Element und der äußeren Buchse in Axialrichtung gelagert sein.

Es ist also Aufgabe der vorliegenden Erfindung, ein Achssystem bereitzustellen, das dafür ausgelegt ist, einfach montiert und demontiert werden zu können, ohne dass dabei die Betriebssicherheit empfindlicher Anbaueinheiten oder des gesamten Achssystems beeinträchtigt wird.

Diese Aufgabe wird gelöst mit einem Achssystem mit den Merkmalen des Anspruchs 1. Bevorzugte Ausführungsformen ergeben sich aus den abhängigen Ansprüchen.

Erfindungsgemäß umfasst das Achssystem eine Außeneinheit, eine Nabeneinheit und ein Bremstrommelelement, wobei die Außeneinheit eine maximale Ausdehnung D₁ quer zu einer Rotationsachse aufweist, wobei das Bremstrommelelement einen Stimteil, der sich quer zur Rotationsachse erstreckt und eine Aussparung aufweist, und einen Trommelmantel umfasst, der sich im Wesentlichen parallel zur Rotationsachse erstreckt, wobei die Aussparung des Stirnteils eine Erstreckung quer zur Rotationsachse von mindestens D₁ aufweist, wobei die Erstreckung des Trommelmantels quer zur Rotationsachse kleiner ist als das Innenmaß D₂ einer an dem Bremstrommelelement festlegbaren und dieses zumindest teilweise umgebenden Anbaueinheit, wobei die Außeneinheit in Richtung der Rotationsachse an der Nabeneinheit angeordnet ist und wobei das Bremstrommelelement über die Außeneinheit hinweg verlagerbar und an der Nabeneinheit festlegbar ist Besagte Rotationsachse ist dabei bevorzugt die Fahrzeugächse an der das Achssystem, bzw. eine Radaufhängung für Räder an Nutzfahrzeugen, angeordnet ist. Am äußeren Ende dieser Achse ist eine Außeneinheit angeordnet, wobei die Außeneinheit eine maximale Ausdehnung D₁ quer, oder bevorzugt senkrecht zur Rotationsachse aufweist. Bevorzugt besitzt die Außeneinheit einen kreisrunden Querschnitt, wobei D₁ in dieser Ausführungsform der Außendurchmesser der Außeneinheit ist. In weiteren bevorzugten Ausführungsformen besitzt die Außeneinheit einen elliptischen, rechteckigen oder vieleckigen Querschnitt, wobei D₁ in diesen Fällen jeweils die maximale Erstreckung quer, oder bevorzugt senkrecht zur Rotationsachse dieser Querschnitte ist. Erfindungsgemäß umfasst das Bremstrommelelement einen Stirnteil und einen Trommelmantel, wobei der Stirnteil sich im Wesentlichen quer und der Trommelmantel sich im Wesentlichen parallel zur Rotationsachse erstreckt. Vorzugsweise erstreckt sich der Stirnteil senkrecht zur Rotationsachse Der Stirnteil weist eine Aussparung auf und besitzt somit in einer bevorzugten Ausführungsform die Form einer Kreisringplatte. In weiteren bevorzugten Ausführungsformen kann der Stirnteil auch eine konische Form besitzen oder Absätze bzw. Stufen längs zur Rotationsachse aufweisen. Erfindungsgemäß ist am Stirnteil des Bremstrommelelements eine Aussparung vorgesehen, wobei die Aussparung eine Erstreckung quer zur Rotationsachse aufweist, die mindestens so groß oder größer als die maximale Erstreckung D₁ der Außeneinheit quer zur Rotationsachse ist. Der Querschnitt der Aussparung ist bevorzugt an den Querschnitt der Außeneinheit angepasst, bzw. hierzu kongruent, d. h. bei einer Außeneinheit mit kreisförmigem Querschnitt ist die Aussparung bevorzugt ebenfalls kreisförmig. Bevorzugt besitzt die Aussparung eine etwas größere Erstreckung als die Außeneinheit, so dass zwischen Aussparung und Außeneinheit ein spalt entsteht der wiederum die Montage und Demontage des Bremstrommelelements vereinfacht. Der Spalt zwischen Aussparung und Außeneinheit ist bevorzugt mindestens 0,5mm bis 10cm breit. Es kann auf diese Weise ein Anecken oder Verkanten des Bremstrommelelements im Bereich der Aussparung an der Außeneinheit bei der Montage oder Demontage des Bremstrommelelements vermieden werden. Der Spalt kann auch mindestens 1mm, vorzugsweise 2mm bis 10mm groß sein. Das Bremstrommelelement weist neben dem Stirnteil einen Trommelmantel auf, welcher sich im Wesentlichen parallel zur Rotationsachse erstreckt. Im Wesentlichen parallel bedeutet, dass der Trommelmantel durchaus eine konische oder eine konvex-konkave Querschnittsgeometrie ausweisen kann, die Abstandsänderung zur Rotationsachse im Verlauf des Querschnitts jedoch bevorzugt gering ist im Vergleich zur Erstreckung des Trommelmantels entlang der Rotationsachse. Bevorzugt besitzt der Trommelmantel die Form eines Hohlzylinders Trommelmantel und Stirnteil sind bevorzugt einstückig miteinander verbunden und es ergibt sich für die gesamte Form des Bremstrommelelements ein Hohlkörper mit einem Deckel, wobei der Deckel bzw. der Stirnteil, seinerseits eine Aussparung aufweist. Die maximale Erstreckung des Trommelmantels und des Stimteils quer zur Rotationsachse ist dabei durch eine an das Achssystem anlagerbare Anbaueinheit begrenzt. Diese Anbaueinheit besitzt bevorzugt einen Bereich mit einer nach innen weisenden Fläche, wobei diese Fläche quer zur Rotationsachse eine Erstreckung von D₂ aufweist. Das Bremstrommelelement soll so ausgelegt sein, dass es zumindest teilweise in die Anbaueinheit, insbesondere in den Bereich der nach innen weisende Fläche der Anbaueinheit, eingeschoben werden kann, sodass die maximate Erstreckung des Bremstrommelelements quer zur Rotationsachse nach außen begrenzt ist durch das Innenmaß D₂ der das Bremstrommelelement umgeblenden Anbaueinheit. Es sind somit für das Bremstrommelelement zwei begrenzende Maße gegeben: D₁ das Außenmaß der Außeneinheit, welches von der Aussparung im Stirnteil des Bremstrommelelementes nicht unterschritten werden darf und die minimale Erstreckung quer zur Rotationsachse D₂ der nach innen weisenden Fläche der Anbaueinheit, welche vom Außenmaß des Bremstrommelelements nicht überschritten werden darf. Es wird auf diese Weise erreicht, dass das Bremstrommelelement über die Außeneinheit hinweg verlagerbar ist, was bedeutet, dass das Bremstrommelelement über die bevorzugt fest mit der Nabe verbundene Außeneinheit hinweg verschiebbar ist und anschließend an der Nabe festlegbar ist. Erfindungsgemäß kann das Bremstrommelelement also ohne Demontage des Verbundes aus Nabeneinheit und Außeneinheit montiert und demontiert werden. In der Praxis bedeutet dies, dass die Bremstrommeln und bspw. Bremsbackenelemente innerhalb dieser Bremstrommel ohne Demontage der restlichen am Achssystem angebauten Teile ausgewechselt, gewartet und wieder montiert werden können.

In einer bevorzugten Ausführungsform ist das Bremstrommelelement montierbar und demontierbar während die Außeneinheit festgelegt an der Nabeneinheit verbleibt. Dieses bevorzugte Merkmal des Achssystems gewährleistet, dass die Verbindung zwischen Nabeneinheit und Außeneinheit nicht gelöst werden muss und so vermieden wird, dass zum Beispiel Schmutz oder andere Fremdkörper in die unter Umständen empfindliche Außeneinheit gelangen.

Gemäß der Erfindung ist der Trommelmantel mehrteilig ausgeführt und weist ein Reibelement und einen Trägerbereich auf. Der Trägerbereich ist dabei bevorzugt an der Außenseite des Trommelmantels vorgesehen und das Reibelement an seiner inneren Fläche angelagert. In einer weiteren bevorzugten Ausführungsform ist der Trägerbereich einstückig mit dem Stirnteil des Bremstrommelelements ausgeführt. Wie schon der Trommelmantel so weist auch der Trägerbereich eine bevorzugt hohlzylindrische Form auf, wobei an seiner Innenfläche das Reibelement mit einer bevorzugt stoffschlüssigen Verbindung fest mit dem Trägerbereich verbunden wird. An seiner Außenfläche weist der Trägerbereich bevorzugt Verstärkungen auf, in welche Rücksprünge eingefügt sind, die dafür geeignet sind Befestigungselemente aufzunehmen, um weitere Anbauteile an das Achssystem anlagern zu können. Durch das Anbringen lokaler Verstärkungen am Trägerbereich kann sowohl die Festigkeit des Bremstrommelelements erhöht werden, wobei gleichzeitig das Gewicht, im Vergleich zu einer vollständigen Verstärkung des gesamten Trägerbereiches nur geringfügig erhöht werden muss. Gemäß der Erfindung ist der Trägerbereich aus einem Material höherer Festigkeit ausgebildet als das Reibelement. Bevorzugt weist das Material im Trägerbereich eine hohe Zugfestigkeit auf, sodass bei gleichbleibender Querschnittsdicke höhere Kräfte aufgenommen werden können, die wiederum höhere Spannung (Biegespannung, Zugspannung) im Material zur Folge haben. Das Herstellungsmaterial des Reibelementes ist bevorzugt ein guter Reibpartner zu gängigen Bremsbelägen für Bremsbacken, die in Trommelbremsen zum Einsatz kommen. Das Reibelement ist bevorzugt mittels einer form- und/oder stoffschlüssigen Verbindung mit dem Trägerbereich verbunden, wobei gewährleistet ist, dass die hohen Bremskräfte über diese Verbindung vom Reibelement zum Trägerbereich hin übertragen werden können. Das bevorzugte Herstellungsmaterial für den Trägerbereich ist Kugelgraphiteisen, auch als Sphäroguss bezeichnet, welches eine besonders hohe Zugfestigkeit besitzt und daher geeignet ist, die hohen auftretenden Kräfte bei vergleichsweise geringer Materialdicke zu übertragen. Das Reibelement wird bevorzugt aus Graüguss hergestellt, da Grauguss ein besonders geeigneter Reibpartner für gängige Bremsbelagmaterialien ist. Es ist auf diese Weise möglich die guten Reibeigenschaften von Grauguss mit der hohen Zugfestigkeit des Kugelgraphitgusses zu vereinen und auf diese Weise die nötige Materialstärke weiter zu verringern. Auf diese Weise kann bevorzugt der von dem Bremstrommelelement benötigte Bauraum vorteilhaft reduziert werden. Auf besonders vorteilhafte Weise kann so der Bereich, in welchem das Bremstrommelelement an der Nabeneinheit festgelegt ist besonders klein gehalten werden, da das stabilere Material auch bei geringer Materialstärke den auftretenden Momenten und Kräften standhält. Es kann auf diese Weise eine besonders flache Nabe verwendet werden, was wiederum dem Grundgedanken des erfindungsgemäßen Achssystems zuträglich ist, da auf diese Weise der benötigte Außendurchmesser des Bremstrommelelements verringert und der mögliche Außendurchmesser, bzw. die maximale Erstreckung D₁ quer zur Rotationsachse, der Außeneinheit erhöht werden kann. Bevorzugt kann das Reibelement mittels eines Schleudergussverfahrens in den Trägerbereich bzw. das Bremstrommelelement eingefügt werden.

In einer bevorzugten Ausführungsform ist das Verhältnis der Erstreckung der Aussparung zur maximalen Erstreckung des Bremstrommelelements quer zur Rotationsachse größer als 0,4, bevorzugt größer als 0,6 und besonders bevorzugt etwa 0,7 bis 0,85. Es hat sich gezeigt, dass mittels dieser Verhältnisse der Bauraum zwischen den beiden Grenzwerten D₂ außen und D₁ innen, bei Materialkombinationen verschiedener Gusseisen, besonders gut ausgenutzt werden kann. Die untere Grenze dieses Verhältnisses 0,4 ist besonders dann bevorzugt, wenn eine kleine Außeneinheit mit einem relativ großen Befestigungsbereich zwischen Bremstrommel und Nabe kombiniert werden soll. Das bevorzugte Verhältnis der Erstreckung der Aussparung zur maximalen Erstreckung des Bremstrommelelements quer zur Rotationsachse von 0,85 ist besonders dann vorteilhaft, wenn eine große Außeneinheit mit einem relativ kleinen Bremstrommelelement am Achssystem kombiniert werden soll. Dieses Verhältnis von 0,85 geht mit einem kleinen Bereich, der zur Befestigung des Bremstrommelelements an der Nabeneinheit dient, und folglich mit einer großen Anforderung an die Festigkeit des Materials des Bremstrommelelements einher.

In einer vorteilhaften Ausführungsform umfasst das Achssystem eine Radeinheit, wobei die Radeinheit einen Felgenmantel aufweist, welcher sich im Wesentlichen parallel zur Rotationsachse erstreckt, wobei die zur Rotationsachse hinweisende innere Fläche des Felgenmantels eine minimale Erstreckung D₂ quer, oder bevorzugt senkrecht zur Rotationsachse aufweist und wobei der Felgenmantel über das Trommelelement schiebbar und die Radeinheit am Bremstrommelelement festlegbar ist. Eine bevorzugte Aufgabe des Achssystems ist es also, eine Radeinheit drehbar um eine Achse zu lagern. Bevorzugt weist diese Radeinheit einen Felgenmantel auf, welcher sich im Wesentlichen parallel zur Rotationsachse erstreckt. Mit anderen Worten ist der Felgenmantel eine Art Hülse und im Wesentlichen parallel bedeutet in diesem Fall, dass seine Erstreckung längs zur Rotationsachse größer ist als die Abstandsänderung quer zur Rotationsachse. Bevorzugt kann die Radeinheit auch eine konvex-konkave Form aufweisen. Nach innen, hin zur Rotationsachse, besitzt der Felgenmantel eine minimale Erstreckung D₂, welche in der Auslegung des Achssystems die äußere Grenze für das Bremstrommelelement D₂ darstellt. Ist der äußere Durchmesser des Bremstrommelelements kleiner als die minimale Erstreckung des Felgenmantels, so kann dieser zumindest teilweise über das Bremstrommelelement hinweg geschoben werden.

Dies ist erwünscht, da auf diese Weise die Spurbreite und der insgesamt von der Achskonstruktion benötigte Bauraum reduziert werden kann, da die Radeinheit nicht vor dem Bremstrommelelement angeordnet ist, sondern teilweise über dieses hinweggeschoben wird. In weiteren bevorzugten Ausführungsformen können auch mehrere Radeinheiten am Achssystem vorgesehen sein.

In einer bevorzugten Ausführungsform ist die Radeinheit mittels eines ersten Befestigungselements am Bremstrommelelement gegen Verlagerung und Verdrehung relativ zum Bremstrommelelement gesichert. Mittels dieser Sicherung können Momente, zum Beispiel Torsionsmomente vom Bremstrommelelement auf die Radeinheit bzw. von der Radeinheit auf das Bremstrommelelement übertragen werden. In einer bevorzugten Ausführungsform sind eine Vielzahl von Befestigungselementen zwischen Bremstrommelelement und Radeinheit vorgesehen. Es hat sich als vorteilhaft erwiesen, dass mindestens 8, bevorzugt 10 bis 15 und besonders bevorzugt 16 erste Befestigungselemente, die Radeinheit am Bremstrommelelement fixieren. Wird vom Achssystem eine höhere Festigkeit erwartet, oder auf Grund sicherheitstechnischer Anforderungen verlangt, so können auch weitere Befestigungselemente zum Einsatz kommen. Die Anzahl der Befestigungselemente ist lediglich durch den zur Verfügung stehenden Bauraum am Bremstrommelelement begrenzt. In einer besonders bevorzugten Ausführungsform ist das Befestiguhgselement eine Schraube. Diese greift form- bzw. kraftschlüssig in den Befestigungsbereich des Bremstrommelelementes ein und fixiert mit Hilfe eines Schraubenkopfes der im Vergleich zum Rest des Schraubenkörpers verdickt ist, die Radeinheit am Bremstrommelelement. In einer weiteren bevorzugten Ausführungsform ist das erste Befestigungsmittel eine in das Bremstrommelelement eingegossene Radschraube, die in ihrem vom Material des Bremstrommelelements umschlossenen Bereich, geeignete Vorsprünge aufweist, welche mit dem Material des Bremstrommelelements eine formschlüssige Verbindung eingehen und die Radschraube auf diese Weise gegen Verlagerung und Verdrehung relativ zum Bremstrommelelement sichern. Die Radeinheit wird in dieser Ausführungsform mittels auf die Radschraube aufgeschraubter Radmuttern am Bremstrommelelement festgelegt.

In einer weiterhin bevorzugten Ausführungsform ist das Bremstrommelelement mittels eines zweiten Befestigungselements an der Nabeneinheit gegen Verlagerung und Verdrehung relativ zur Nabeneinheit gesichert. Mittels der von den zweiten Befestigungselementen hergestellten Verbindung zwischen Nabeneinheit und Bremstrommelelement können Momente, die von der Außeneinheit auf die Nabeneinheit übertragen werden auf das Bremstrommelelement und auf an diesem festgelegte Radeinheit übertragen werden. Bevorzugt sind die zweiten Befestigungselemente näher an der Rotationsachse angeordnet als die ersten Befestigungselemente, wobei dies die Verwendung einer Nabeneinheit mit einer relativ geringen Erstreckung quer zur Rotationsachse ermöglicht. In einer bevorzugten Ausführungsform sind mindestens 6, bevorzugt 10 und besonders bevorzugt 12 bis 16 zweite Befestigungselemente zwischen Nabeneinheit und Bremstrommelelement angeordnet. Die zweiten Befestigungselemente greifen dabei in dafür vorgesehene Aussparungen an der Nabeneinheit ein und üben eine Zugkraft auf das Bremstrommelelement aus, mittels welcher diese gegen die Nabeneinheit gepresst wird. Besonders bevorzugt sind die zweiten Befestigungselemente Innensechskantschrauben. Diese haben den Vorteil, dass sie in dafür vorgesehene Aussparungen am Bremstrommelelement eingesetzt werden können und im versenkten Zustand angezogen bzw. wieder gelöst werden können. Die Schraubenköpfe stellen somit keine Oberflächenunebenheit an der Stirnseite des Bremstrommelelementes dar.

In einer bevorzugten Ausführungsform sind die Nabeneinheit und/oder das Trommelelement und/oder die Radeinheit im Wesentlichen rotationssymmetrisch ausgebildet. Dabei bedeutet im Wesentlichen rotationssymmetrisch, dass sich die Querschnitte der Nabeneinheit und/oder der Trommeleinheit und/oder der Radeinheit bei Rotation der Schnittebene um die Rotationsachse bevorzugt nicht oder nur in ihren nicht tragenden Teilen ändern. Dabei können an den rotationssymmetrischen tragenden Teilen der Nabeneinheit und/oder der Trommeleinheit und/oder der Radeinheit, Elemente befestigt oder angelagert sein, die nicht rotationssymmetrisch zur Rotationsachse ausgebildet sind.

In einer besonders bevorzugten Ausführungsform ist die Außeneinheit ein Zusatzantrieb, welcher ausgelegt ist, ein Antriebsmoment auf die Nabeneinheit zu übertragen. Die Außeneinheit ist bevorzugt sowohl mit der Achse als auch mit der Nabe verbunden und etabliert ein Drehmoment zwischen diesen beiden Baueinheiten. Vorteilhafterweise ist die Außeneinheit mittels geeigneter Befestigungselemente an der Nabeneinheit festgelegt, diese mit dem Bremstrommelelement und dieses wiederum mit der Radeinheit und es findet eine Kraft- und Momentübertragung von der Außeneinheit bis hin zur Radeinheit statt. Dabei ergibt das vom Achssystem zu lösende Problem, dass ein stärkerer Zusatzantrieb meistens einen größeren Außendurchmesser D₁ besitzt, wodurch das Verhältnis der Erstreckung der Aussparung zur maximalen Erstreckung des Bremstrommelelements quer zur Rotationsachse steigen muss und die vom stärkeren Zusatzantrieb zu übertragenden, größeren Kräfte und Momente in einem kleineren Befestigungsbereich zwischen Nabeneinheit und Bremstrommelelement bewältigt werden müssen. Die Materialanforderungen an den Befestigungsbereich zwischen Nabeneinheit und Bremstrommelelement und dem zwischen Radeinheit und Bremstrommelelement werden bevorzugt durch Herstellungsmaterialien mit entsprechender hoher Festigkeit bewältigt. Vorteilhafterweise kann als Außeneinheit ein hydrostatischer Zusatzantrieb zum Einsatz gelangen, welcher vorteilhafterweise einen von einem Hydrauliksystem gelieferten Flüssigkeitsdruck in ein Drehmoment wandelt um dieses beispielsweise zwischen der Nabeneinheit und der Achse zu etablieren. In einer weiterhin bevorzugten Ausführungsform ist die Außeneinheit ein elektrisch betriebener Zusatzantrieb, welcher insbesondere bevorzugt nicht nur ein Moment auf das Achssystem übertragen kann, sondern auch ein Moment aufnehmen kann, beispielsweise während eines Bremsvorganges. Dabei kann die Effizienz eines Nutzfahrzeuges gesteigert werden, indem die bei einem Bremsvorgang aufgenommene Energie durch den elektrischen Zusatzantrieb in elektrische Energie gewandelt wird und in entsprechenden Speichern für elektrische Energie gespeichert wird.

In einer bevorzugten Ausführungsform weist das Achssystem ein Eingriffselement auf, welches ausgelegt ist an der Nabeneinheit und am Bremstrommelelement in dafür vorgesehene Rücksprünge einzugreifen und auf diese Weise die Nabeneinheit und das Bremstrommelelement gegen Verdrehung relativ zu einander zu si-chern. Das Eingriffselement unterstützt auf diese Weise die Momentübertragung von der Nabeneinheit zum Bremstrommelelement und damit von der Außeneinheit, bzw. vom Zusatzantrieb bis hin zur Radeinheit über die verschiedenen Befestigungselemente. Es können auf diese Weise bevorzugt zum Beispiel die Gewinde der Befestigungselemente vor übermäßiger Flächenpressung und damit einhergehendem Verschleiß bewahrt werden und die Lebensdauer des Achssystems auf diese Weise gesteigert werden. Bevorzugt ist das Eingriffselement ein Nutenstein, welcher in, an Nabeneinheit und Bremstrommelelement vorgesehene, Nute eingreift. In einer besonders bevorzugten Ausführung sind 2, 3 oder 4 Nutensteine zwischen Nabeneinheit und Bremstrommelelement angeordnet.

In bevorzugter Weise wird das Achssystem mit den folgenden Schritten hergestellt: Bereitstellen einer Nabeneinheit, einem Bremstrommelelement und einem zweiten Befestigungselement, wobei an der Nabeneinheit eine Außeneinheit mit einer maximalen Erstreckung D₁ quer zu einer Rotationsachse angeordnet ist, wobei das Bremstrommelelement einen Stirnteil aufweist, und wobei der Stirnteil eine Aussparung mit einer Erstreckung quer zur Rotationsachse von mindestens D₁ aufweist, wobei das Bremstrommelelement einen Stirnteil aufweist. Dann Verlagern des Bremstrommelelements über die Nabeneinheit bis der Stirnteil an der Nabeneinheit anliegt und Festlegen des Bremstrommelelements an der Nabeneinheit mittels eines oder einer Vielzahl zweiter Befestigungselemente.

In besonders bevorzugter Weise weist die Erstreckung der Aussparung des Stirnteils quer zur Rotationsachse ein Übermaß gegenüber der maximalen Ausdehnung D₁ der Außeneinheit quer zur Rotationsachse von mindestens 1mm bis 20cm, bevorzugt 2mm bis 10cm und insbesondere bevorzugt von 10mm bis 2cm auf. Dieses Übermaß der Aussparung im Stirnteil des Bremstrommelelements gegenüber der maximalen Ausdehnung bzw. Erstreckung der Außeneinheit dient insbesondere einer Erleichterung der Montage des Achssystems. Da Achskomponenten eines Nutzfahrzeuges, wie Bremstrommelelement oder Außeneinheit mitunter sehr schwer und damit nur unter großer Mühe für einen Monteur handhabbar sind, ist es wichtig ein Verkanten dieser Komponenten miteinander während der Montage zu vermindern. Besagtes Übermaß, bzw. der Spalt zwischen Bremstrommelelement und Außeneinheit verhindern bevorzugt solches Verkanten. Da auf gegenüberliegenden Seiten der Außeneinheit je ein Spalt zur Aussparung des Bremstrommelelements entsteht, ist die Summe zweier gegenüberliegender Spaltbreiten gleich dem vorher beschriebenen Übermaß. Bevorzugt betragen die Spaltbreiten zweier gegenüberliegender Spalte je die Hälfte des besagten Übermaßes. Bevorzugt ist der Spalt jedoch nicht zu groß gewählt, da sonst die für die Befestigung des Bremstrommelelements an der Nabeneinheit zur Verfügung stehende Fläche des Stirnteils bei einer bestimmten Größe der Außeneinheit zu stark verkleinert wird.

Es versteht sich, dass die weiteren Vorteile und Merkmale des erfindungsgemäßen Achssystems ebenfalls in dem erfindungsgemäßen Verfahren zur Herstellung eines Achssystems Anwendung finden können.

Weitere Vorteile und Merkmale ergeben sich aus der nachfolgenden beispielhaften Beschreibung einer bevorzugten Ausführungsform des erfindungsgemäßen Achssystems mit Bezug auf die beigefügten Figuren. Unterschiedliche Merkmale verschiedener Ausführungsbeispiele können im Rahmen der Erfindung miteinander kombiniert werden. Es zeigen:
- Fig. 1: Eine Schnittansicht einer bevorzugten Ausführungsform des erfindungsgemäßen Achssystems,
- Fig. 2: eine Schnittansicht einer bevorzugten Ausführungsform des Bremstrommelelements und
- Fig. 3: eine Ansicht einer bevorzugten Ausführungsform des erfindungsgemäßen Bremstrommelelements der Richtung der Rotationsachse folgend.

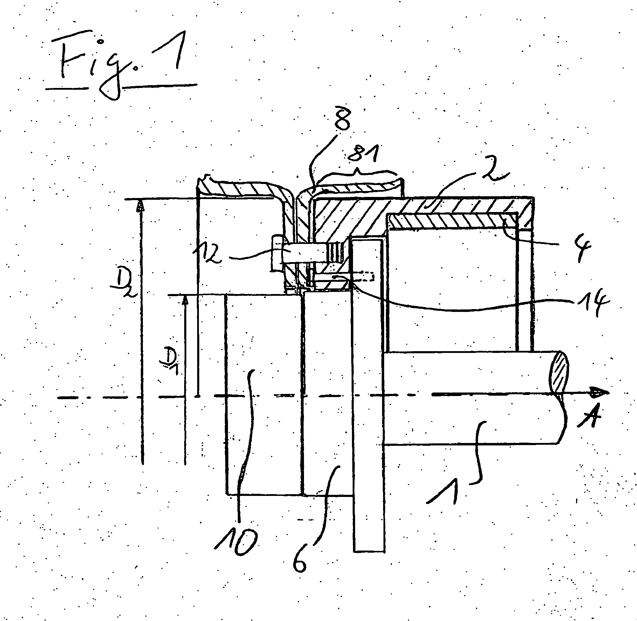

In Fig. 1 ist eine erste bevorzugte Ausführungsform des erfindungsgemäßen Achssystems gezeigt. Ein Bremstrommelelement 2 ist an einem Nabenelement 6 bevorzugt mithilfe eines zweiten Befestigungselements 14 festgelegt. Das zweite Befestigungselement 14 ist bevorzugt eine Schraube, wobei die in der Figur dargestellte bevorzugte Ausführungsform der Schraube einen Schraubenkopf aufweist, der aus der in der Figur linken Fläche des Bremstrommelelements-2 herausragt. Besonders bevorzugt wird eine Schraube, die einen Schraubenkopf mit Innensechskant aufweist, verwendet, da dieser Schraubenkopf in das Bremstrommelelement versenkt und im versenkten Zustand festgezogen und wieder gelöst werden kann. An der, in der Figur linken, Seite der Nabeneinheit 6 ist eine Außeneinheit 10 an der Nabeneinheit 6 angeordnet. Nabeneinheit 6 und Außeneinheit 10 sind nicht in geschnittener Darstellung gezeigt und die Befestigungselemente, mittels welcher die Außeneinheit 10 an der Nabeneinheit 6 festgelegt ist, sind nicht explizit dargestellt. Die Außeneinheit 10 weist eine maximale Erstreckung D₁ quer zur Rotationsachse A auf. Bevorzugt ist die Außeneinheit 10 ein zylinderförmig ausgebildeter hydraulischer Zusatzantrieb oder ein elektrischer Zusatzantrieb, bzw. Elektromotor, welcher ein Drehmoment zwischen einer Achse 1 und der Nabeneinheit 6 aufbringt. Die Achse 1 ist in der Regel starr oder nicht drehbar und die Nabeneinheit vorzugsweise über eine Lageranordnung an der Achse 1 drehbar gelagert. Weiterhin sind am Bremstrommelelement 2 zwei Radeinheiten 8 angeordnet und mittels eines ersten Befestigungselements 12 befestigt. Neben dieser bevorzugten Ausführungsform kann auch nur eine der beiden Radeinheiten 8 vorgesehen sein. Die Radeinheit 8 weist bevorzugt einen Felgenmantel 81 auf, welcher sich im Wesentlichen parallel zur Rotationsachse A erstreckt, wobei die Abstandsänderung zwischen Felgenmantel 81 und Rotationsachse A im Verlauf der Erstreckung parallel zur Rotationsachse verglichen mit dem Betrag der Erstreckung des Felgenmantels parallel zur Rotationsachse klein, bevorzugt im Bereich 0.01 bis 0.9, sein soll. Die zur Rotationsachse A hin weisende, innere Fläche des Felgenmantels 81 weist eine Erstreckung quer zur Rotationsachse A von mindestens D₂ auf. Da das Bremstrommelelement 2 erfindungsgemäß eine Erstreckung, die kleiner als D₂ ist, aufweist, kann die Radeinheit 8 bevorzugt über das Bremstrommelelement 2 hinweg geschoben werden, bis der quer zur Rotationsachse A ausgerichtete Bereich der Radeinheit 8 an das Bremstrommelelement 2 grenzt. Der Felgenmantel 81 ist dabei bevorzugt eine Art Hülse, die das Bremstrommelelement 2 zumindest teilweise umschließt. An der nach innen weisenden Fläche des Bremstrommelelements 2 ist bevorzugt ein Reibelement 4 vorgesehen, wobei das Reibelement besonders bevorzugt aus einem Material hergestellt ist, das eine gute Reibpaarung mit gängigen Bremsbelagwerkstoffen bildet. In einer vorteilhaften Ausführungsform sind die Nabeneinheit 6, das Bremstrommelelement 2, ein drehbarer Teil der Außeneinheit 10, die Radeinheit 8 und die ersten und zweiten Befestigungselemente (12, 14) drehbar um die Rotationsachse Angelagert.

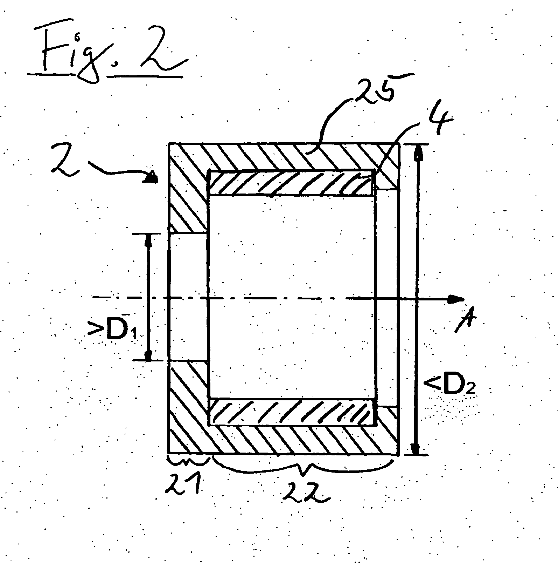

Fig. 2 zeigt eine Schnittansicht einer bevorzugten Ausführungsform des erfindungsgemäßen Bremstrommelelements 2. Das Bremstrommelelement 2 ist in dieser bevorzugten Ausführungsform in die zwei Bereiche Stirnteil 21 und Trommelmantel 22 geteilt. Der Stirnteil 21 erstreckt sich bevorzugt quer zur Rotationsachse A, wobei in weiteren nicht gezeigten Ausführungsformen auch eine konische, halbkugelförmige oder pyramidenförmige Geometrie des Stirnteils 21 bevorzugt sein kann. Darüber hinaus kann der Stirnteil bevorzugt auch Absätze parallel zur Rotationsachse A aufweisen. In den Stirnteil 21 ist erfindungsgemäß eine Aussparung eingebracht, wobei die Aussparung bevorzugt konzentrisch zur Außenfläche des Stirnteils 21 und bevorzugt auch des Trommelmantels 22 ausgerichtet ist. Die minimale Erstreckung der Aussparung quer zur Rotationsachse A ist bei der Auslegung des Achssystems bevorzugt durch das Außenmaß D₁ der Außeneinheit 10 vorgegeben. In einer besonders vorteilhaften Ausführungsform sind der Stirnteil 21 und die Aussparung kreisrund, bzw. weisen eine zylinderförmige Geometrie auf. Der Trommelmantel 22 erstreckt sich bevorzugt im Wesentlichen parallel zur Rotationsachse A, wobei seine Geometrie auch bevorzugt konisch ist oder Stufen quer zur Rotationsachse A aufweist. Der Trommelmantel 22 umfasst bevorzugt einen Trägerbereich 25 und ein an dessen Innenseite angeordnetes Reibelement 4. Das Reibelement besteht dabei bevorzugt aus einem Werkstoff, der in Paarung mit gängigen Bremsbelagwerkstoffen hohe Reibungskoeffizienten aufweist. Besonders bevorzugt ist das Herstellungsmaterial des Reibelements 4 Grauguss. Weiterhin können auch keramische Werkstoffe, Sintermetalle und/oder Verbundwerkstoffkombinätionen zur Herstellung des Reibelements 4 verwendet werden. Der Trägerbereich 25 ist bevorzugt aus einem Material höherer Festigkeit als das Reibelement 4 hergestellt. Besonders bevorzugt ist das Herstellungsmaterial für den Trägerbereich 25 Kugelgraphiteisen, auch als Sphäroguss bezeichnet, da es ausgezeichnete Festigkeitseigenschaften aufweist. Bevorzugt ist auch der Stirnteil 21 aus Kugelgraphiteisen hergestellt. Auf bevorzugte Weise kann so die Materialstärke an Stirnteil 21 und Trägerbereich 25 des Trommelmantels 22 verringert werden, wobei die gleichbleibend hohen Kräfte nun über größere Spannungen im Material übertragen können werden. Diese Senkung der Materialstärke, bewirkt bevorzugt eine Verringerung des vom gesamten Bremstrommelelement 2 benötigten Bauraumes, so dass die beiden geometrischen Randbedingungen D₁ und D₂ eingehalten werden können. Bevorzugt weisen der Trägerbereich 25 und das Reibelement 4 eine flache, hohlzylinderförmige Geometrie auf.

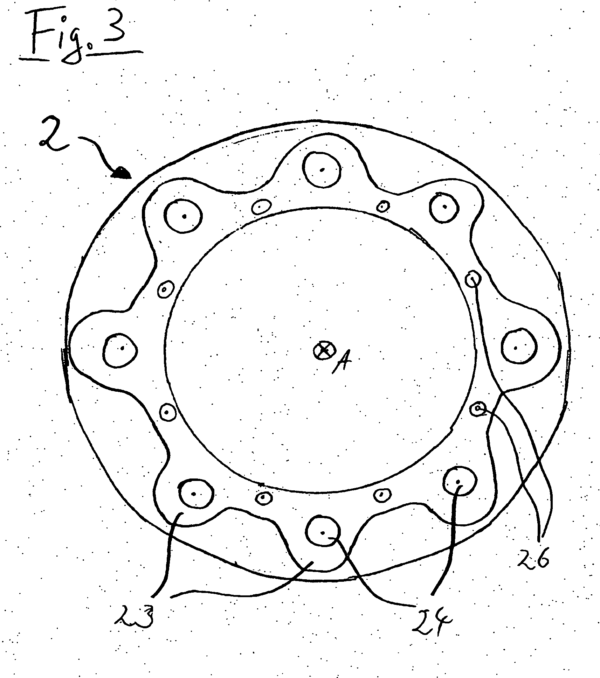

Fig. 3 zeigt eine Ansicht entlang der Richtung der Rotationsachse A einer bevorzugten Ausführungsform des Bremstrommelelements 2. Bevorzugt weist das Bremstrommelelement 2 an seiner Außenseite Verstärkungsbereiche 23 auf. Bevorzugt sind diese Verstärkungsbereiche 23 durch Materialanhäufung gekennzeichnet, wobei in jedem Verstärkungsbereich 23 je eine erste Befestigungselementaufnahme 24 vorgesehen ist. In die erste Befestigungselementaufnahme 24 greift bevorzugt ein erstes Befestigungselement 12 ein und fixiert die Radeinheit 8 am Bremstrommelelement 2. Die Materialanhäufung der Verstärkungsbereiche 23 ermöglicht dabei bevorzugt eine günstige Spannungsverteilung bei der Kraftübertragung von Radeinheit 8 zum Bremstrommelelement 2 über das erste Befestigungselement 12 und die erste Befestigungselementaufnahme 24. Bevorzugt weisen die Verstärkungsbereiche 23 abgerundete Geometrieverläufe auf, um Kerbwirkung bei der Kraftübertragung zu vermeiden. Bevorzugt versetzt zu den ersten Befestigungselementaufnahmen sind in dieser bevorzugten Ausführungsform zweite Befestigungselementaufnahmen 26 angeordnet, in welchen je ein zweites Befestigungselement 14 angeordnet wird, in die Nabeneinheit 6 eingreift und auf diese Weise das Bremstrommelelement 2 an der Nabeneinheit 6 fixiert. Die erste Befestigungselementaufnahme 24 ist bevorzugt als Gewindebohrung, die zweite Befestigungselementaufnahme 26 als Durchgangsbohrung ausgeführt. Dabei weist die zweite Befestigungselementaufnahme 26 bevorzugt eine Vertiefung größeren Durchmessers als die durchgehende Bohrung auf, in welche bevorzugt ein Schraubenkopf versenkt werden kann. In der Figur gezeigt ist die bevorzugte Ausführungsform mit je acht ersten bzw. zweiten Befestigungselementaufnahmen 24, 26. In weiteren bevorzugten Ausführungsformen können 10 bis 12 und besonders bevorzugt 13 bis 18 erste und/oder zweite Befestigungselementaufnahmen 24, 26 vorgesehen sein. Mit Vorteil sind so viele Befestigungselementaufnahmen 24, 26 vorgesehen wie jeweilige Befestigungselemente 12, 14.

### Bezugszeichenliste:

1 - Achse
2 - Bremstrommetelement
4 - Reibelement
6 - Nabeneinheit
8 - Radeinheit
10 - Außeneinheit
12 - erstes Befestigungselement
14 - zweitens Befestigungselement
21 - Stirnteil
22 - Trommelmantel
23 - Verstärkungsbereich
24 - erste Befestigungselementaufnahme
25 - Trägerbereich
26 - zweite Befestigungselementaufnahme
81 - Felgenmantel
A - Rotationsachse
D₁ - maximale Erstreckung Außeneinheit
D₂ - minimale Erstreckung Felgenmantel

## Patentansprüche

1. Achssystem, insbesondere Achssystem für Nutzfahrzeuge, umfassend eine Außeneinheit (10), eine Nabeneinheit (6) und ein Bremstrommelelement (2), wobei die Außeneinheit (10) eine maximale Ausdehnung D₁ quer zu einer Rotationsachse (A) aufweist,
wobei das Bremstrommelelement (2) einen Stirnteil (21), der sich quer zur Rotationsachse (A) erstreckt und eine Aussparung aufweist, und einen Trommelmantel (22) umfasst, der sich im Wesentlichen parallel zur Rotationsachse (A) erstreckt,
wobei die Aussparung des Stimteils (21) eine Erstreckung quer zur Rotationsachse (A) von mindestens D₁ aufweist,
wobei die Erstreckung des Trommelmantels (22) quer zur Rotationsachse (A) kleiner ist als das Innenmaß D₂ einer, an dem Bremstrommelelement (2) festlegbaren und dieses zumindest teilweise umgebenden, Anbaueinheit, wobei die Außeneinheit (10) in Richtung der Rotationsachse (A) an der Nabeneinheit (6) angeordnet ist, und
wobei das Bremstrommelelement (2) über die Außeneinheit (10) hinweg verlagerbar und an der Nabeneinheit (6) festlegbar ist, **dadurch gekennzeichnet, dass** der Trommelmantel (22) mehrteilig ausgeführt ist und ein Reibelement (4) und einen Trägerbereich (25) aufweist, wobei der Trägerbereich (25) aus einem Material höherer Festigkeit ausgebildet ist als das Reibelement (4).

2. Achssystem nach Anspruch 1,
wobei das Bremstrommelelement (2) montierbar und demontierbar ist, während die Außeneinheit (10) festgelegt an der Nabeneinheit (6) verbleibt.

3. Achssystem nach einem der vorhergehenden Ansprüche,
wobei das Verhältnis der Erstreckung der Aussparung zur maximalen Erstreckung des Bremstrommelelements quer zur Rotationsachse größer als 0.4, bevorzugt größer als 0.6 und besonders bevorzugt etwa 0.7 bis 0.85 ist.

4. Achssystem nach einem der vorhergehenden Ansprüche wobei die Anbaueinheit eine Radeinheit (8) ist,
wobei die Radeinheit (8) einen Felgenmantel (81) umfasst, welcher sich im Wesentlichen parallel zur Rotationsachse (A) erstreckt,
wobei die zur Rotationsachse (A) hinweisende, innere Fläche des Felgenmantels (81) eine minimale Erstreckung D₂ quer zur Rotationsachse (A) aufweist, und
wobei der Felgenmantel (81) über das Bremstrommelelement (2) schiebbar und die Radeinheit (8) am Bremstrommelelement (2) festlegbar ist.

5. Achssystem nach Anspruch 4,
wobei die Radeinheit (8) mittels eines ersten Befestigungselements (12) am Bremstrommelelement (2) gegen Verlagerung und Verdrehung relativ zum Bremstrommelelement (2) gesichert ist.

6. Achssystem nach einem der vorhergehenden Ansprüche,
wobei das Bremstrommelelement (2) mittels eines zweiten Befestigungselements (14) an der Nabeneinheit (6) gegen Verlagerung und Verdrehung relativ zur Nabeneinheit (6) gesichert ist.

7. Achssystem nach einem der vorhergehenden Ansprüche,
wobei die Nabeneinheit (6) und/oder das Bremstrommelelement (2) und/oder die Radeinheit (8) im Wesentlichen rotationssymmetrisch ausgebildet sind.

8. Achssystem nach einem der vorhergehenden Ansprüche,
wobei die Außeneinheit (10) ein Zusatzantrieb ist, welcher ausgelegt ist, ein Antriebsmoment auf die Nabeneinheit (6) zu übertragen.

9. Achssystem nach einem der vorhergehenden Ansprüche,
umfassend ein Eingriffselement,
wobei das Eingriffselement ausgelegt ist, in an der Nabeneinheit (6) und am Bremstrommelelement (2) vorgesehene Rücksprünge einzugreifen und auf diese Weise die Nabeneinheit (6) und das Bremstrommelelement (2) gegen Verdrehung relativ zueinander zu sichem.

10. Achssystem nach einem der vorhergehenden Ansprüche,
wobei die Erstreckung der Aussparung des Stirnteils (21) quer zur Rotationsachse ein Übermaß gegenüber der maximalen Ausdehnung (D₁) der Außeneinheit (10) quer zur Rotationsachse (A) von mindestens 1 mm bis 20cm, bevorzugt 2mm bis 10cm und insbesondere bevorzugt von 10mm bis 2cm aufweist.

11. Verfahren zur Herstellung eines Achssystem umfassend die Schritte:
a) Bereitstellen einer Nabeneinheit (6), eines Bremstrommelelements (2) und mindestens eines zweiten Befestigungselements (14),
wobei an der Nabeheinheit (6) eine Außeneinheit (10) mit einer maximalen Erstreckung D₁ quer zu einer Rotationsachse (A) angeordnet ist, wobei das Bremstrommelelement (2) einen Stirnteil (21) und einen Trommelmantel (22) aufweist, der sich im Wesentlichen parallel zur Rotationsachse (A) erstreckt,
wobei der Stirnteil (21) eine Aussparung mit einer Erstreckung quer zur Rotationsachse (A) von mindestens D₁ aufweist, und
wobei der Trommelmantel (22) mehrteilig ausgeführt ist und ein Reibelement (4) und einen Trägerbereich (25) aufweist,
wobei der Trägerbereich (25) aus einem Material höherer Festigkeit ausgebildet ist als das Reibelement (4),
b) Verlagern des Bremstrommelelements (2) entlang der Rotationsachse (A) über die Nabeneinheit (6) hinweg, bis der Stirnteil (21) an der Nabeneinheit (6) anliegt und
c) Festlegen des Bremstrommelelements (2) an der Nabeneinheit (6) mittels eines oder einer Vielzahl von zweiten Befestigungselementen (14).

## Claims

1. An axle system, in particular an axle system for utility vehicles or commercial vehicles, comprising an external unit (10), a hub unit (6) and a brake drum element (2),
wherein the external unit (10) has a maximum extent D1 transversely with respect to an axis of rotation (A),
wherein the brake drum element (2) comprises a face part (21), which extends transversely with respect to the axis of rotation (A) and comprises a cutout, and a drum casing (22), which extends essentially parallel to the axis of rotation (A),
wherein the cutout of the face part (21) has an extent transversely with respect to the axis of rotation (A) of at least D1,
wherein the extent of the drum casing (22) transversely with respect to the axis of rotation (A) is smaller than the internal dimension D2 of an attachment unit which can be fixed to and at least partially surrounds the brake drum element (2),
wherein the external unit (10) is arranged in the direction of the axis of rotation (A) on the hub unit (6), and
wherein the brake drum element (2) can be moved over the external unit (10) and fixed to the hub unit (6), **characterized in that** the drum casing (22) is designed multi-part and comprises a friction element (4) and a carrier portion (25), wherein the carrier portion (25) is designed from a material of higher strength than the friction element (4),

2. The axle system of claim 1,
wherein the brake drum element (2) is mountable and dismountable while the external unit (10) remains fixed to the hub unit (6).

3. The axle system of any one of the preceding claims,
wherein the relationship of the extent of the cutout to the maximum extent of the brake drum element transversely with respect to the axis of rotation is larger than 0.4, preferably larger than 0.6, and particularly preferably about 0.7 to 0.85.

4. The axle system of any one of the preceding claims,
wherein the attachment unit is a wheel unit (8),
wherein the wheel unit (8) comprises a rim casing (81), which extends essentially parallel to the axis of rotation (A),
wherein the inner surface of the rim casing (81) facing the axis of rotation (A) has a minimum extent D2 transversely with respect to the axis of rotation (A), and
wherein the rim casing (81) can be moved or slid over the brake drum element (2), and the wheel unit (8) can be fixed to the brake drum element (2).

5. The axle system of claim 4,
wherein the wheel unit (8) is secured by means of a first fastening element (12) at the brake drum element (2) against displacement and torsion relative to the brake drum element (2).

6. The axle system of any one of the preceding claims,
wherein the brake drum element (2) by means of a second fastening element (14) at the hub unit (6) is secured against displacement and torsion relative to the hub unit (6).

7. The axle system of any one of the preceding claims,
wherein the hub unit (6) and/or the brake drum element (2) and/or the wheel unit (8) are designed essentially rotation-symmetric.

8. The axle system of any one of the preceding claims,
wherein the external unit (10) is an additional drive unit which is designed to transmit a driving torque or driving momentum onto the hub unit (6).

9. The axle system of any one of the preceding claims,
comprising an engagement element,
wherein the engagement element is designed to engage recesses provided on the hub unit (6) and on the brake drum element (2) and to thus secure the hub unit (6) and the brake drum element (2) against torsion relative to each other.

10. The axle system of any one of the preceding claims,
wherein the extent of the cutout of the face part (21) transversely with respect to the axis of rotation has an excess relative to the maximum extent (D1) of the external unit (10) transversely with respect to the axis of rotation (A) of at least 1 mm to 20 cm, preferably 2 mm to 10 cm, and particularly preferably of 10 mm to 2 cm.

11. A method of manufacturing an axle system, comprising the steps of:
a) providing a hub unit (6), a brake drum element (2) and at least a second fastening element (14),
wherein on the hub unit (6) there is arranged an external unit (10) with a maximum extent D1 transversely with respect to an axis of rotation (A), wherein the brake drum element (2) comprises a face part (21) and a drum casing (22), which extends essentially parallel to the axis of rotation (A), wherein the face part (21) comprises a cutout with an extent transversely with respect to the axis of rotation (A) of at least D1, and
wherein the drum casing (22) is designed multi-part and comprises a friction element (4) and a carrier portion (25),
wherein the carrier portion (25) is designed from a material of higher strength than the friction element (4),
b) displacing the brake drum element (2) along the axis of rotation (A) over the hub unit (6) until the face part (21) rests against the hub unit (6), and
c) fixing the brake drum element (2) to the hub unit (6) by means of one or a plurality of second fastening elements (14).

## Revendications

1. Système d'essieu, en particulier système d'essieu pour véhicule utilitaire, comprenant une unité extérieure (10), une unité de moyeu (6) et un élément à tambour de frein (2), dans lequel l'unité extérieure (10) présente une extension maximale D1 perpendiculairement à un axe de rotation (A),
dans lequel l'élément à tambour de frein (2) comprend une partie frontale (21), qui s'étend perpendiculairement à l'axe de rotation (A) et qui présente un évidement, et inclut une enveloppe de tambour (22) qui s'étend sensiblement parallèlement à l'axe de rotation (A),
dans lequel l'évidement de la partie frontale (21) présente une extension, perpendiculairement à l'axe de rotation (A), d'au moins D1,
dans lequel l'extension de l'enveloppe de tambour (22) perpendiculairement à l'axe de rotation (A) est plus petite que la dimension intérieure D2 d'une unité rapportée, susceptible d'être immobilisée sur l'élément à tambour de frein (2) et entourant celui-ci au moins partiellement,
dans lequel l'unité extérieure (10) est agencée en direction de l'axe de rotation (A) sur l'unité de moyeu (6), et
dans lequel l'élément à tambour de frein (2) est déplaçable au-delà de l'unité extérieure (10) et susceptible d'être immobilisé sur l'unité de moyeu (6), **caractérisé en ce que**
l'enveloppe de tambour (22) est réalisée en plusieurs parties et comprend un élément à friction (4) et une zone portante (25),
dans lequel la zone portante (25) est réalisée en un matériau présentant une plus forte solidité que l'élément à friction (4).

2. Système d'essieu selon la revendication 1,
dans lequel l'élément à tambour de frein (2) est susceptible d'être monté et démonté, alors que l'unité extérieure (10) demeure immobilisée sur l'unité de moyeu (6).

3. Système d'essieu selon l'une des revendications précédentes,
dans lequel le rapport de l'extension de l'évidement sur l'extension maximale de l'élément à tambour de frein perpendiculairement à l'axe de rotation est supérieur à 0,4, de préférence supérieur à 0,6, et de manière particulièrement préférée d'environ 0,7 à 0,85.

4. Système d'essieu selon l'une des revendications précédentes,
dans lequel l'unité rapportée est une unité formant roue (8),
dans lequel l'unité formant roue (8) inclut une enveloppe de jante (81) qui s'étend sensiblement parallèlement à l'axe de rotation (A),
dans lequel la surface intérieure, tournée vers l'axe de rotation (A), de l'enveloppe de jante (81) présente une extension minimale D2 perpendiculairement à l'axe de rotation (A), et
dans lequel l'enveloppe de jante (81) est susceptible d'être enfilée pardessus l'élément à tambour de frein (2) et l'unité formant roue (8) est susceptible d'être immobilisée sur l'élément à tambour de frein (2).

5. Système d'essieu selon la revendication 4,
dans lequel l'unité formant roue (8) est bloquée au moyen d'un premier élément de fixation (12) sur l'élément à tambour de frein (2) à l'encontre d'un déplacement et d'une rotation par rapport à l'élément à tambour de frein (2).

6. Système d'essieu selon l'une des revendications précédentes,
dans lequel l'élément à tambour de frein (2) est bloqué au moyen d'un second élément de fixation (14) sur l'unité de moyeu (6) à l'encontre d'un déplacement et d'une rotation par rapport à l'unité de moyeu (6).

7. Système d'essieu selon l'une des revendications précédentes,
dans lequel l'unité de moyeu (6) et/ou l'élément à tambour de frein (2) et/ou l'unité formant roue (8) sont réalisés sensiblement à symétrie de révolution.

8. Système d'essieu selon l'une des revendications précédentes,
dans lequel l'unité extérieure (10) est un entraînement additionnel, qui est conçu pour transmettre un couple d'entraînement à l'unité de moyeu (8).

9. Système d'essieu selon l'une des revendications précédentes, comprenant un élément d'engagement
ledit élément d'engagement étant conçu pour s'engager dans des ressauts prévus sur l'unité de moyeu (6) et sur l'élément à tambour de frein (2) et bloquer de cette manière l'unité de moyeu (6) et l'élément à tambour de frein (2) à l'encontre d'une rotation l'une par rapport à l'autre.

10. Système d'essieu selon l'une des revendications précédentes,
dans lequel l'extension de l'évidement de la partie frontale (21) perpendiculairement à l'axe de rotation présente une surdimension par rapport à l'extension maximale (D1) de l'unité extérieure (10) perpendiculairement à l'axe de rotation (A) d'au moins 1 mm à 20 cm, de préférence 2 mm à 10 cm, et en particulier de manière préférée de 10 mm à 2 cm.

11. Procédé pour la réalisation d'un système d'essieu, comprenant les étapes consistant à :
a) mettre à disposition une unité de moyeu (6), un élément à tambour de frein (2) et au moins un second élément de fixation (14),
dans lequel une unité extérieure (10) avec une extension maximale D1 perpendiculairement à un axe de rotation (A) est agencée sur l'unité de moyeu (6),
dans lequel l'élément à tambour de frein (2) comprend une partie frontale (21) et une enveloppe de tambour (22) qui s'étend sensiblement parallèlement à l'axe de rotation (A),
dans lequel la partie frontale (21) comporte un évidement avec une extension perpendiculairement à l'axe de rotation (A) d'au moins D1, et
dans lequel l'enveloppe de tambour (22) est réalisée en plusieurs pièces et comprend un élément à friction (4) et une zone portante (25),
dans lequel la zone portante (25) est réalisée en un matériau présentant une plus forte solidité que l'élément à friction (4),
b) déplacer l'élément à tambour de frein (2) le long de l'axe de rotation (A) au-delà de l'unité de moyeu (6) jusqu'à ce que la partie frontale (21) s'applique contre l'unité de moyeu (6), et
c) immobiliser l'élément à tambour de frein (2) contre l'unité de moyeu (6) au moyen d'un ou d'une pluralité de seconds éléments de fixation (14).
